# EUROPÄISCHE PATENTSCHRIFT

(11) **EP 2 960 050 B1**
(45) Veröffentlichungstag und Bekanntmachung des Hinweises auf die Patenterteilung: **17.05.2017**
(21) Anmeldenummer: 15173189.0
(22) Anmeldetag: 22.06.2015
(51) Int. Cl.: B32B 3/06, E04F 15/02, E04F 15/08, E04F 15/18, B32B 7/12, B32B 13/04, B32B 21/02, B32B 21/04

(54) **TROCKENESTRICHPLATTE SOWIE UNTERBODEN MIT DERARTIGEN TROCKENESTRICHPLATTEN**
DRY SCREED PLATE AND UNDERBODY WITH SUCH DRY SCREED PLATES
PLAQUE DE CHAPE SÈCHE AINSI QUE SOUS-SOL AVEC DE TELLES PLAQUES DE CHAPE SÈCHE

(30) Priorität: 24.06.2014 DE 202014005148 U
(43) Veröffentlichungstag der Anmeldung: 30.12.2015
(73) Patentinhaber: Fermacell GmbH, 47259 Duisburg (DE)
(72) Erfinder: Rohlfs, Heinrich, 38723 Seesen (DE); Lindner, Thilo, 09575 Eppendorf (DE)
(74) Vertreter: Patent- und Rechtsanwälte Dr. Solf & Zapf

(56) Entgegenhaltungen:
- DE-A1-102004 041 863
- JP-A- 407 189 466

## Beschreibung

Die vorliegende Erfindung betrifft ein plattenförmiges Trockenestrichelement bzw. eine Trockenestrichplatte mit Stufenfalz für einen Unterboden in Trockenbauweise sowie einen derartigen Unterboden in Trockenbauweise aufweisend mehrere derartige Trockenestrichelemente bzw. Trockenestrichplatten.

Trockenbau ist eine Form des Herstellens von raumbegrenzenden Bauteilen im Bauwesen, die durch Zusammenfügen industrieller Halbzeuge, insbesondere Platten, erfolgt. Dabei werden keine hydraulisch reagierenden Baustoffe wie Zementmörtel oder Beton verwendet. Als Estrich, bezeichnet man den Aufbau des Unterbodens als Untergrund für Fußbodenbeläge. Trockenestrichplatten sind vorgefertigte Platten, die zur Herstellung des Unterbodens lediglich aneinander gesetzt und miteinander verbunden werden. In der Regel weisen die Trockenestrichplatten an ihren Plattenseitenflächen zueinander komplementäre Stufenfalze oder Nut und Feder auf, so dass mehrere Trockenestrichplatten formschlüssig aneinander gesetzt werden können. Die aneinandergrenzenden Trockenestrichplatten werden üblicherweise zusätzlich miteinander verschraubt und verklebt.

Bekannt sind beispielsweise Trockenestrichplatten der Firma Norit, bei welchen die Plattenseitenflächen eine Kombination aus Nut/Feder und Stufenfalz mit einer Rastnase aufweisen. Die einzelnen Trockenestrichplatten werden so miteinander verrastet. Die Ausgestaltung der Plattenseitenflächen ist ziemlich aufwendig und somit teuer.

DE 102004041863 A1 offerbart eine Trockenestrichplatte gemäß des Oberbegriffs des Anspruchs 1 und einen Unterboden gemäß des Oberbegriffs des Anspruchs 12.

Aufgabe der vorliegenden Erfindung ist die Bereitstellung einer Trockenestrichplatte, welche schnell, einfach und sicher verlegt werden kann und kostengünstig herstellbar ist.

Weitere Aufgabe der Erfindung ist die Bereitstellung eines Unterbodens in Trockenbauweise, der mehrere derartige Trockenestrichplatten aufweist.

Diese Aufgaben werden durch eine Trockenestrichplatte mit den Merkmalen von Anspruch 1 sowie einen Unterboden mit den Merkmalen von Anspruch 12 gelöst. Vorteilhafte Weiterbildungen der Erfindung sind in den sich jeweils anschließenden Unteransprüchen gekennzeichnet.

Bei der erfindungsgemäßen Trockenestrichplatte handelt es sich um eine quaderförmige Trockenestrichplatte für einen Unterboden in Trockenbauweise aufweisend eine Plattenhöhenrichtung, eine erste, ebenflächige Estrichplattenbreitseite, insbesondere eine Estrichplattenauflagefläche, eine dieser in Plattenhöhenrichtung gegenüberliegende, zweite Estrichplattenbreitseite, insbesondere eine Estrichplattenoberseite, sowie vier paarweise aneinander angrenzende Estrichplattenseitenflächen, die jeweils einen Stufenfalz aufweisen, wobei die Trockenestrichplatte (1) zumindest einen ersten Stufenfalz und zumindest einen dazu komplementären, zweiten Stufenfalz aufweist, und
wobei die Stufenfalze (21a;21b) jeweils eine erste Falzstoßfläche (22;25), eine zweite Falzstoßfläche (23;26) und dazwischen eine Falzanlagefläche (24;27) aufweisen,
wobei die erste Falzstoßfläche (22) des ersten Stufenfalzes (21 a) eine erste, schräge Klemmfläche (12) aufweist und die dazu komplementäre, erste Falzstoßfläche (26) des zweiten Stufenfalzes (21 b) eine zweite, schräge Klemmfläche (16) aufweist,
wobei die beiden ersten Falzstoßflächen (22;26) derart ausgebildet sind, dass nach dem Zusammenstecken zweier Trockenestrichplatten (1) derart, dass die beiden Stufenfalze (21 a;b) formschlüssig ineinander greifen,
   - die beiden Klemmflächen (12;16) zumindest bereichsweise in einem Klemmbereich (31) flächig aneinander liegen, und
   - die beiden ersten Falzstoßflächen (22;26) in Plattenhöhenrichtung (4) gesehen beidseits des Klemmbereichs (31) voneinander beabstandet sind.

Die erfindungsgemäße Trockenestrichplatte weist eine quaderförmige Grundplatte und eine damit fest verbundene, quaderförmige Deckplatte auf, wobei die Grundplatte und die Deckplatte derart zueinander versetzt angeordnet sind, dass die Stufenfalze ausgebildet werden und wobei eine der Deckplatte abgewandte Grundplattenauflagefläche die erste Estrichplattenbreitseite, insbesondere die Estrichplattenauflagefläche, und eine der Grundplatte abgewandte Deckplattenoberseite die zweite Estrichplattenbreitseite, insbesondere die Estrichplattenoberseite, bildet.

Vorzugsweise sind die beiden ersten Falzstoßflächen derart ausgebildet, dass nach dem Zusammenstecken zweier Trockenestrichplatten derart, dass die beiden Stufenfalze formschlüssig ineinander greifen, in Plattenhöhenrichtung gesehen auf der einen Seite des Klemmbereichs eine zur zweiten Estrichplattenbreitseite, insbesondere zur Estrichplattenoberseite, hin offene Klebstoffaufnahmefuge und auf der anderen Seite des Klemmbereichs ein Klebstoffaufnahmekanal gebildet wird, wobei sich insbesondere der Klebstoffaufnahmekanal und die Klebstoffaufnahmefuge parallel zu Falzlängsrichtungen der ineinander greifenden Stufenfalze erstrecken.

Vorzugsweise weist die erste Falzstoßfläche (22) des ersten Stufenfalzes (21 a) in Plattenhöhenrichtung (4) von der zweiten Estrichplattenbreitseite (19), insbesondere von der Estrichplattenoberseite (19), zur ersten Estrichplattenbreitseite (18), insbesondere zur Estrichplattenauflagefläche (18), hin gesehen auf:
- die erste Klemmfläche,
- eine sich daran anschließende Stirnfläche, wobei die erste Klemmfläche und die Stirnfläche über eine erste, konvexe, Stoßflächenkante ineinander übergehen,
   und
   die erste Falzstoßfläche des zweiten Stufenfalzes weist in Plattenhöhenrichtung von der zweiten Estrichplattenbreitseite, insbesondere von der Estrichplattenoberseite, zur ersten Estrichplattenbreitseite, insbesondere zur Estrichplattenauflagefläche, hin gesehen auf:
- eine Fugenfläche,
- die zweite Klemmfläche, welche sich an die Fugenfläche anschließt, wobei die zweite Klemmfläche und die Fugenfläche über eine zweite, konvexe Stoßflächenkante ineinander übergehen, wobei die zweite Stoßflächenkante in Plattenhöhenrichtung gesehen einen größeren Abstand von der ersten Estrichplattenbreitseite, insbesondere von der Estrichplattenauflagefläche, aufweist als die erste Stoßflächenkante.

Vorzugsweise erstreckt sich die erste Klemmfläche von der zweiten Estrichplattenbreitseite, insbesondere von der Estrichplattenoberseite, aus gesehen schräg auf die erste Estrichplattenbreitseite, insbesondere auf die Estrichplattenauflagefläche, zu und von der gegenüberliegenden Estrichplattenseitenfläche weg.

Vorzugsweise schließt die erste Klemmfläche mit der zweiten Estrichplattenbreitseite, insbesondere mit der Estrichplattenoberseite, einen Winkel α ein, wobei vorzugsweise gilt: 180° < α < 270°.

Zweckmäßigerweise gilt für den Winkel α: 200° ≤ α ≤ 220°, bevorzugt 205° ≤ α ≤ 215°.

Vorzugsweise schließt die Stirnfläche mit der ersten Klemmfläche einen Winkel β ein, wobei gilt: 180° < β.

Zweckmäßigerweise gilt für den Winkel β: 230° ≤ β ≤ 250°, bevorzugt 235° ≤ β ≤ 245°.

Vorzugsweise schließt die zweite Klemmfläche mit der zweiten Estrichplattenoberseite, insbesondere mit der Estrichplattenoberseite, einen Winkel γ ein, wobei gilt: γ = 540°-α.

Vorzugsweise erstreckt sich die zweite Klemmfläche von der zweiten Estrichplattenbreitseite, insbesondere von der Estrichplattenoberseite, aus gesehen schräg auf die erste Estrichplattenbreitseite, insbesondere auf die Estrichplattenauflagefläche, zu und zu der gegenüberliegenden Estrichplattenseitenfläche hin.

Vorzugsweise schließt die Fugenfläche mit der zweiten Klemmfläche einen Winkel δ ein, wobei gilt: 180° < δ.

Vorzugsweise erstreckt sich die Fugenfläche von der zweiten Klemmfläche aus gesehen schräg auf die zweite Estrichplattenbreitseite, insbesondere auf die Estrichplattenoberseite, zu und auf die gegenüberliegende Estrichplattenseitenfläche zu.

Vorzugsweise weisen die erste Klemmfläche und die zweite Klemmfläche jeweils eine Steigung m_{KF1};m_{KF2} in Plattenhöhenrichtung auf, wobei die beiden Steigungen m_{KF1};m_{KF2} betragsmäßig gleich sind.

Vorzugsweise ist die erste Klemmfläche zur zweiten Estrichplattenbreitseite, insbesondere zur Estrichplattenoberseite, hin gerichtet und die zweite Klemmfläche ist zur ersten Estrichplattenbreitseite, insbesondere zur Estrichplattenauflagefläche, hin gerichtet.

Vorzugsweise sind die erste und die zweite Klemmfläche zumindest bereichsweise auf gleicher Höhe in Bezug auf die Plattenhöhenrichtung angeordnet.

Vorzugsweise ist die erste Falzstoßfläche des ersten Stufenfalzes vorspringend und die erste Falzstoßfläche des zweiten Stufenfalzes ist rückspringend.

Vorzugsweise sind die Falzanlageflächen des ersten und zweiten Stufenfalzes zur Plattenhöhenrichtung senkrecht und zueinander koplanar.

Vorzugsweise sind die zweiten Falzstoßflächen des ersten und zweiten Stufenfalzes jeweils parallel zur Falzlängsrichtung des jeweiligen Stufenfalzes und parallel zur Plattenhöhenrichtung sowie insbesondere senkrecht zur jeweiligen Falzanlagefläche.

Vorzugsweise weist die Trockenestrichplatte eine erste und zweite Plattenbreitenrichtung auf, wobei die beiden Plattenbreitenrichtungen zueinander und zur Plattenhöhenrichtung senkrecht sind.

Vorzugsweise liegen sich die zueinander komplementären Stufenfalze in die erste Plattenbreitenrichtung gesehen gegenüber.

Vorzugsweise sind die beiden Klemmflächen der beiden sich in die erste Plattenbreitenrichtung gegenüberliegenden Stufenfalze in die erste Plattenbreitenrichtung zumindest bereichsweise zueinander fluchtend angeordnet.

Vorzugsweise weist die Trockenestrichplatte einen weiteren ersten Stufenfalz und einen weiteren zweiten Stufenfalz auf, wobei sich die weiteren, zueinander komplementären Stufenfalze in die zweite Plattenbreitenrichtung gesehen gegenüberliegen, und wobei vorzugsweise die beiden Klemmflächen der beiden weiteren, sich in die zweite Plattenbreitenrichtung gegenüberliegenden Stufenfalze in die zweite Plattenbreitenrichtung zumindest bereichsweise zueinander fluchtend angeordnet sind.

Vorzugsweise handelt es sich bei der Grundplatte und der Deckplatte jeweils um eine Gipsfaserplatte oder zementäre bzw. zementgebundene Platte oder Holzfaserplatte oder Holzwerkstoffplatte handelt, wobei die Grundplatte und die Deckplatte miteinander fest verbunden, insbesondere verklebt und/oder geklammert sind.

Vorzugsweise weist die Trockenestrichplatte einen einzigen ersten Stufenfalz und einen einzigen zweiten, dem ersten Stufenfalz in die erste Plattenbreitenrichtung gegenüberliegenden, Stufenfalz, sowie zwei zueinander komplementäre und sich in die zweite Plattenbreitenrichtung gegenüberliegende Stufenfalze mit jeweils zwei vertikalen Stoßflächen und einer horizontalen Falzanlagefläche auf.

Bei dem erfindungsgemäßen Unterboden handelt es sich um einen Unterboden in Trockenbauweise mit zumindest zwei quaderförmigen Trockenestrichplatten, vorzugsweise mit zumindest zwei erfindungsgemäßen, wie zuvor beschriebenen, Trockenestrichplatten, die jeweils eine Plattenhöhenrichtung, eine ebenflächige Estrichplattenauflagefläche, eine dieser in Plattenhöhenrichtung gegenüberliegende Estrichplattenoberseite sowie vier paarweise aneinander angrenzende Estrichplattenseitenflächen, aufweisen, die jeweils einen Stufenfalz aufweisen,
wobei die Stufenfalze jeweils eine erste Falzstoßfläche, eine zweite Falzstoßfläche und dazwischen eine Falzanlagefläche aufweisen,
wobei die erste Trockenestrichplatte zumindest einen ersten Stufenfalz und die zweite Trockenestrichplatte zumindest einen dazu komplementären, zweiten Stufenfalz aufweist, wobei die beiden Stufenfalze formschlüssig ineinander greifen,
wobei die erste Falzstoßfläche des ersten Stufenfalzes eine erste, schräge Klemmfläche aufweist und die dazu komplementäre, erste Falzstoßfläche des zweiten Stufenfalzes eine zweite, zur ersten Klemmfläche parallele, schräge Klemmfläche aufweist, wobei die beiden Klemmflächen zumindest bereichsweise in einem Klemmbereich flächig aneinander liegen, wobei die beiden Falzstoßflächen in Plattenhöhenrichtung gesehen beidseits des Klemmbereichs voneinander beabstandet sind.

Die erfindungsgemäße Trockenestrichplatte weist eine quaderförmige Grundplatte und eine damit fest verbundene, quaderförmige Deckplatte auf, wobei die Grundplatte und die Deckplatte derart zueinander versetzt angeordnet sind, dass die Stufenfalze ausgebildet werden und wobei eine der Deckplatte abgewandte Grundplattenauflagefläche die erste Estrichplattenbreitseite, insbesondere die Estrichplattenauflagefläche, und eine der Grundplatte abgewandte Deckplattenoberseite die zweite Estrichplattenbreitseite, insbesondere die Estrichplattenoberseite, bildet.

Vorzugsweise ist in Plattenhöhenrichtung gesehen auf der einen Seite des Klemmbereichs eine zur Estrichplattenoberseite hin offene Klebstoffaufnahmefuge und auf der anderen Seite des Klemmbereichs ein Klebstoffaufnahmekanal vorhanden, wobei sich insbesondere der Klebstoffaufnahmekanal und die Klebstoffaufnahmefuge parallel zu Falzlängsrichtungen der ineinander greifenden Stufenfalze erstrecken.

Vorzugsweise wird der Klebstoffaufnahmekanal von der zweiten Klemmfläche, der Stirnfläche und der Falzanlagenfläche des ersten oder des zweiten Stufenfalzes begrenzt.

Vorzugsweise wird die Klebstoffaufnahmefuge von der ersten Klemmfläche und der Fugenfläche gebildet.

Vorzugsweise sind die einzelnen Trockenestrichplatten des Unterbodens ausschließlich miteinander verklemmt und verklebt.

Im Folgenden wird die Erfindung anhand einer Zeichnung beispielhaft näher erläutert. Es zeigen:
- Figur 1:: Schematisch einen Querschnitt zweier aneinandergesetzter erfindungsgemäßer Trockenestrichplatten eines erfindungsgemäßen Unterbodens
- Figur 2:: Eine schematische Draufsicht auf eine erfindungsgemäße Trockenestrichplatte mit gestrichelt angedeuteter zweiter Trockenestrichplatte des Unterbodens
- Figur 3:: Eine vergrößerte Darstellung eines Querschnitts zweier voneinander beabstandeter Trockenstrichplatten im Bereich von Stufenfalzen

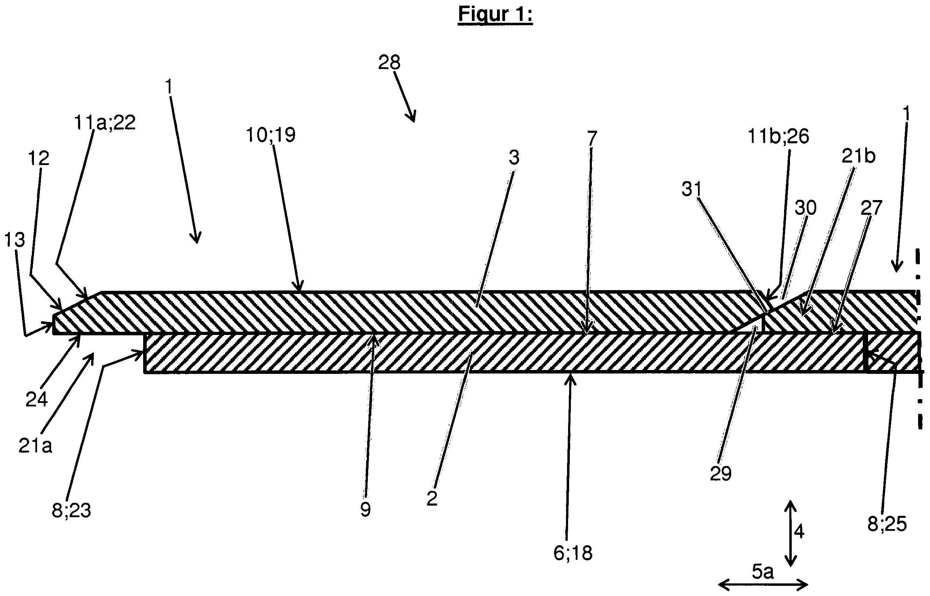

Das erfindungsgemäße, plattenförmige Trockenestrichelement bzw. die Trockenestrichplatte 1 (Fig. 1-3) weist eine quaderförmige Grundplatte 2 sowie eine auf der Grundplatte 2 angeordnete, quaderförmige Deckplatte 3 auf. Zudem weist die Trockenestrichplatte 1 eine Plattenhöhenrichtung 4, sowie eine erste und zweite Plattenbreitenrichtung 5a;b auf. Die erste und zweite Plattenbreitenrichtung 5a;b sind zueinander und zur Plattenhöhenrichtung 4 senkrecht.

Die Grundplatte 2 weist eine untere ebene bzw. ebenflächige, der Deckplatte 3 abgewandte, Grundfläche bzw. Grundplattenauflagefläche 6 sowie eine dieser, insbesondere in Plattenhöhenrichtung 4, gegenüberliegende, der Deckplatte 3 zugewandte, Grundplattenoberfläche bzw. Grundplattenoberseite 7 auf. Die Grundplattenoberseite 7 ist ebenfalls eben bzw. ebenflächig ausgebildet und parallel zur Grundplattenauflagefläche 6. Die Grundplattenauflagefläche 6 und die Grundplattenoberseite 7 sind zudem beide senkrecht zur Plattenhöhenrichtung 4. Zudem weist die Grundplatte 2 vier sich paarweise gegenüberliegende und sich paarweise aneinander anschließende, durchgehende, Grundplattenseitenflächen 8 auf, die die Grundplattenoberseite 7 und die Grundplattenauflagefläche 6 miteinander verbinden. Die Grundplattenseitenflächen 8 sind insbesondere ebenfalls eben bzw. ebenflächig ausgebildet und senkrecht zur Grundplattenauflagefläche 6 sowie zur Grundplattenoberseite 7. Zudem sind die aneinander angrenzenden Grundplattenseitenflächen 8 jeweils zueinander senkrecht.

Die Deckplatte 3 weist eine untere ebene bzw. ebenflächige, der Grundplatte 2 zugewandte, Deckplattenunterseite 9 sowie eine dieser, insbesondere in Plattenhöhenrichtung 4, gegenüberliegende, der Grundplatte abgewandte, Deckplattenoberfläche bzw. Deckplattenoberseite 10 auf. Die Deckplattenoberseite 10 ist ebenfalls eben bzw. ebenflächig ausgebildet und parallel zur Deckplattenunterseite 9. Die Deckplattenunterseite 9 ist koplanar zur Grundplattenoberseite 7. Die Deckplattenunterseite 9 und die Deckplattenoberseite 10 sind zudem beide senkrecht zur Plattenhöhenrichtung 4.

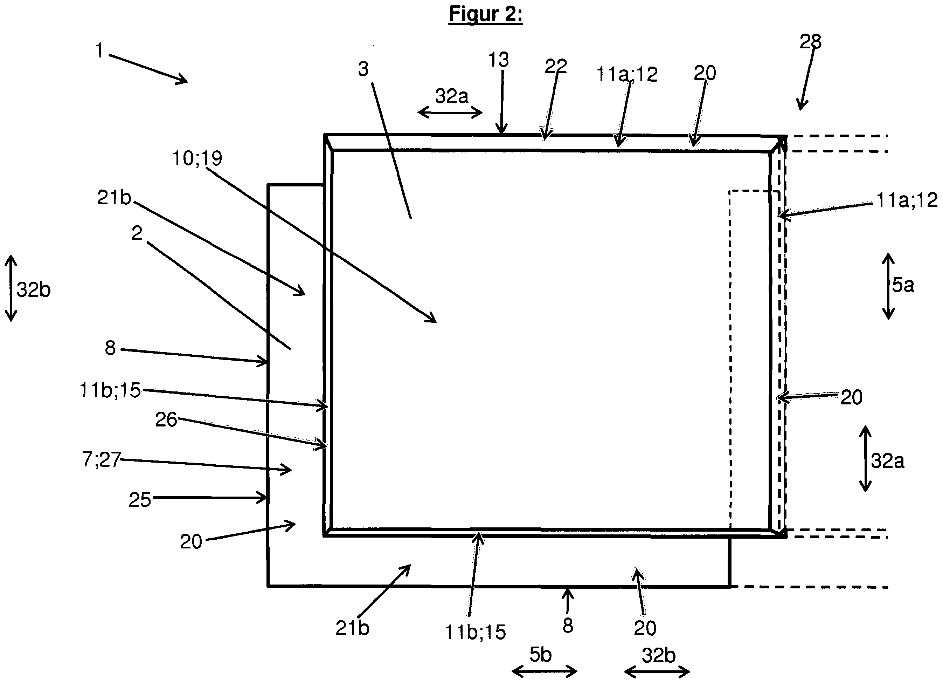

Zudem weist die Deckplatte 3 vier sich paarweise in die erste bzw. zweite Plattenbreitenrichtung 5a;b gegenüberliegende und sich paarweise aneinander anschließende, Deckplattenseitenflächen 11 a;b auf, die die Deckplattenoberseite 10 und die Deckplattenunterseite 9 miteinander verbinden. Im Gegensatz zu den Grundplattenseitenflächen 8 sind die Deckplattenseitenflächen 11 a;b jedoch erfindungsgemäß nicht durchgehend ebenflächig ausgebildet. Zudem sind die Deckplattenseitenflächen 11 a;b paarweise identisch und paarweise zueinander korrespondierend ausgebildet. Insbesondere weist die Deckplatte 3 jeweils zwei erste Deckplattenseitenflächen 11a und zwei zweite Deckplattenseitenflächen 11 b auf, welche zu den ersten Deckplattenseitenflächen 11 a komplementär sind. Die beiden ersten Deckplattenseitenflächen 11a grenzen dabei einendig jeweils aneinander und andernendig an eine der beiden zweiten Deckplattenseitenflächen 11 b an. Folglich grenzen auch die beiden zweiten Deckplattenseitenflächen 11 b einendig jeweils aneinander und andernendig an eine der beiden ersten Deckplattenseitenflächen 11 a an (Fig. 2).

Die beiden ersten Deckplattenseitenflächen 11a weisen dabei jeweils von der Deckplattenoberseite 10 aus in Plattenhöhenrichtung 4 gesehen zunächst eine erste bzw. obere, ebene bzw. ebenflächige, schräge Klemmfläche bzw. Anlagefläche 12 und eine sich daran anschließende Stirnfläche 13 auf. Die Klemmfläche 12 ist zur Deckplattenoberseite 10 abgewinkelt. Die Stirnfläche 13 schließt sich zudem an die Deckplattenunterseite 9 an. Schräg im Sinne dieser Anmeldung meint dabei, dass die Klemmfläche 12 weder parallel noch senkrecht zur Plattenhöhenrichtung 4 ist. Bzw. bedeutet schräg, dass die Klemmfläche 12 weder parallel noch senkrecht zur Deckplattenoberseite 10 ist.

Die erste Klemmfläche 12 schließt mit der Deckplattenoberseite 10 einen Winkel α ein, wobei gilt: 180° < α < 235 °. Das heißt die erste Klemmfläche 12 erstreckt sich ausgehend von der Deckplattenoberseite 10 schräg nach unten auf die Deckplattenunterseite 9 zu und von der in Plattenbreitenrichtung 5a bzw. 5b gegenüberliegenden Deckplattenseitenfläche 11 b weg. Vorzugsweise gilt 200° ≤ α ≤ 220°, besonders bevorzugt 205° ≤ α ≤ 215°. Die erste Klemmfläche 12 weist dabei eine Steigung m_{KF1} auf, welche sich ergibt aus der Erstreckung in Plattenhöhenrichtung 4 bezogen auf die Erstreckung in die jeweilige Plattenbreitenrichtung 5a;b.

Die, insbesondere ebene bzw. ebenflächige, Stirnfläche 13 und die erste Klemmfläche 12 sind zueinander abgewinkelt gehen über eine erste, konvexe Stoßflächenkante 14 ineinander über. Die Stoßflächenkante 14 erstreckt sich parallel zur Falzlängsrichtung 32a eines ersten Stufenfalzes 21 a. Die Stirnfläche 13 erstreckt sich somit von der ersten Klemmfläche 12 zur Deckplattenunterseite 9 hin. Insbesondere ist die Stirnfläche 13 dabei senkrecht zur Deckplattenunterseite 9 bzw. parallel zur Plattenhöhenrichtung 4 und parallel zur Falzlängsrichtung 32a des ersten Stufenfalzes 21 a. Dies ist aber nicht zwingend notwendig. Es kommt lediglich darauf an, dass die Stirnfläche 13 eine größere Steigung m_{SF} in Plattenhöhenrichtung 4 als die erste Klemmfläche 12 aufweist. Aufgrund dessen ist die Stoßflächenkante 14 konvex gekrümmt, also nach außen gewölbt. Das heißt, es kommt darauf an, dass für einen Winkel β, den die Stirnfläche 13 mit der ersten Klemmfläche 12 einschließt, gilt: 180° < β. Dabei kann sich die Stirnfläche 13 auch schräg nach unten auf die Deckplattenunterseite 9 zu und von der in Plattenbreitenrichtung 5a bzw. 5b gegenüberliegenden Deckplattenseitenfläche 11 b weg oder auf diese zu erstrecken. Vorzugsweise gilt für den Winkel β: 230° ≤ β ≤ 250°, besonders bevorzugt 235° ≤ β ≤ 245°.

Die beiden zweiten Deckplattenseitenflächen 11 b weisen jeweils von der Deckplattenoberseite 10 aus in Plattenhöhenrichtung 4 gesehen zunächst eine, insbesondere ebene bzw. ebenflächige, Fugenfläche 15 und eine sich daran anschließende zweite bzw. untere, schräge Klemmfläche 16 auf. Die zweite Klemmfläche 16 schließt sich zudem an die Deckplattenunterseite 9 an.

Die zweite Klemmfläche 16 ist dabei parallel zur ersten Klemmfläche 12 der in Breitenrichtung 5a bzw. 5b gegenüberliegenden ersten Deckplattenseitenfläche 11a. Bzw. die Steigung m_{KF2} der zweiten Klemmfläche 16 entspricht betragsmäßig der Steigung m_{KF1} der ersten Klemmfläche 12. Das heißt, die zweite Klemmfläche 16 schließt mit der Deckplattenoberseite 10 einen Winkel γ ein, wobei gilt: γ = 540° - α. Die zweite Klemmfläche 16 erstreckt sich ausgehend von der Deckplattenunterseite 9 schräg nach oben auf die Deckplattenoberseite 10 zu und von der in Plattenbreitenrichtung 5a bzw. 5b gegenüberliegenden Deckplattenseitenfläche 11 a bzw. 11 b weg. Bzw. von der Deckplattenoberseite 10 aus gesehen erstreckt sich die zweite Klemmfläche 16 schräg nach unten auf die Deckplattenunterseite 9 zu und zu der in Plattenbreitenrichtung 5a bzw. 5b gegenüberliegenden Deckplattenseitenfläche 11a bzw. 11 b hin.

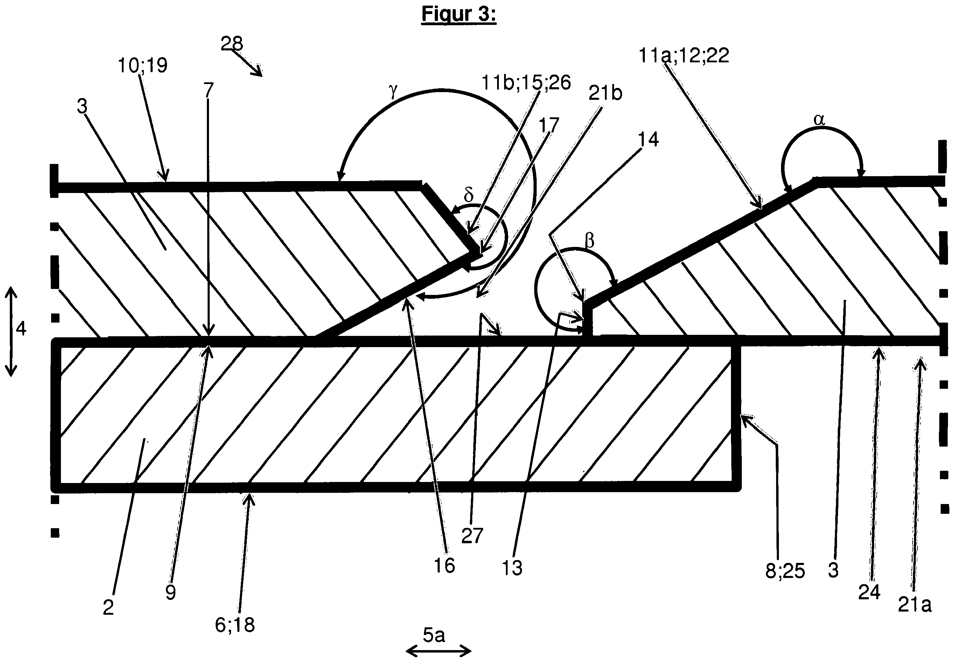

Die, insbesondere ebene bzw. ebenflächige Fugenfläche 15 und die zweite Klemmfläche 16 sind zueinander abgewinkelt und gehen über eine zweite, konvexe Stoßflächenkante 17 ineinander über. Die zweite Stoßflächenkante 17 erstreckt sich parallel zur Falzlängsrichtung 32b eines zweiten Stufenfalzes 21 b. Die Fugenfläche 15 erstreckt sich somit von der zweiten Klemmfläche 16 zur Deckplattenoberseite 10 hin. Dabei kommt es darauf an, dass die Fugenfläche 15 eine andere Steigung als die zweite Klemmfläche 16 aufweist. Das heißt es kommt darauf an, dass für einen Winkel δ, den die Fugenfläche 15 mit der zweiten Klemmfläche 16 einschließt, gilt: 180° < δ. Vorzugsweise ist der Winkel δ dabei so bemessen, dass sich die Fugenfläche 15 von der zweiten Klemmfläche 16 aus gesehen schräg nach oben auf die Deckplattenoberseite 10 zu und auf die in Plattenbreitenrichtung 5a bzw. 5b gegenüberliegende Deckplattenseitenfläche 11 a zu erstreckt (Fig. 1, 3).

Gemäß der Erfindung kommt es zudem darauf an, dass die zweite Stoßflächenkante 17 in Plattenhöhenrichtung 4 gesehen einen größeren Abstand von der Deckplattenunterseite 9 bzw. der Grundplattenoberseite 7 aufweist als die erste Stoßflächenkante 14. Die beiden Klemmflächen 12 und 16 der beiden sich in Plattenbreitenrichtung 5a bzw. 5b gegenüberliegenden Deckplattenseitenflächen 11a;b überlappen sich also in Plattenhöhenrichtung 4 teilweise. Bzw. die beiden Klemmflächen 12 und 16 der beiden sich in Plattenbreitenrichtung 5a bzw. 5b gegenüberliegenden Deckplattenseitenflächen 11 a;b sind zumindest bereichsweise auf gleicher Höhe in Plattenhöhenrichtung 4 gesehen angeordnet. Bzw. die beiden Klemmflächen 12 und 16 der beiden sich in Plattenbreitenrichtung 5a bzw. 5b gegenüberliegenden Deckplattenseitenflächen 11 a;b sind in der jeweiligen Plattenbreitenrichtung 5a bzw. 5b zumindest bereichsweise zueinander fluchtend angeordnet.

Wie bereits erläutert, bilden die Grundplatte 2 und die Deckplatte 3 das erfindungsgemäße plattenförmige Trockenestrichelement 1. Dazu ist die Deckplatte 3 mit ihrer Deckplattenunterseite 9 auf der Grundplattenoberseite 7 diagonal versetzt angeordnet. Die Grundplatte 2 und die Deckplatte 3 sind dabei fest miteinander verbunden. Die Grundplattenauflagefläche 6 bildet somit eine Estrichplattenauflagefläche bzw. Estrichplattenunterseite bzw. eine erste Estrichplattenbreitseite 18 der Trockenestrichplatte 1 und die Deckplattenoberseite 10 bildet eine Estrichplattenoberseite bzw. eine zweite Estrichplattenbreitseite 19 der Trockenestrichplatte 1. Vorzugsweise handelt es sich bei der Grundplatte 2 und der Deckplatte 3 um einzelne Bauplatten, insbesondere um Gipsfaserplatten oder zementäre bzw. zementgebundene Platten oder Holzfaserplatten oder Holzwerkstoffplatten, die miteinander fest verbunden, insbesondere verklebt und/oder geklammert sind. Die beiden Platten 2, 3 können z.B. auch mehrschichtig ausgebildet sein und/oder, wie z.B. im Falle der Gipsfaserplatte, eine Bewehrung aufweisen. Die beiden Platten 2, 3 bestehen zudem vorzugsweise aus dem gleichen Material.

Die Deckplatte 3 und die Grundplatte 2 können aber auch einstückig ausgebildet sein, wobei die in diesem Fall vorzugsweise aus Hartschaum und/oder Leichtbeton und/oder Holzfasermaterial und/oder Holzwerkstoff bestehen.

Dabei sind die Deckplatte 3 und die Grundplatte 2 derart diagonal versetzt zueinander angeordnet, dass deren paarweise parallel zueinander angeordnete Seitenflächen 8 bzw. 11 a;b jeweils mit der Grundplattenoberseite 7 oder der Deckplattenunterseite 9 eine Estrichplattenseitenfläche 20 ausbilden, welche jeweils einen Stufenfalz 21 a;b aufweist.

Aufgrund der unterschiedlichen Ausbildung der ersten und zweiten Deckplattenseitenflächen 11 a bzw. 11 b werden dabei zwei erste Stufenfalze 21 a und zwei zweite Stufenfalze 21 b ausgebildet, wobei die beiden Stufenfalze 21 a;b zueinander komplementär sind. Jeweils ein erster Stufenfalz 21 a ist dabei einem dazu komplementären zweiten Stufenfalz 21 b in eine der beiden Plattenbreitenrichtungen 5a bzw. 5b gegenüberliegend angeordnet. Komplementär meint dabei, dass die beiden Stufenfalze 21a;b beim Zusammenstecken zweier Trockenestrichplatten 1 formschlüssig ineinander greifen. Die beiden Stufenfalze 21 a;b weisen jeweils eine Längserstreckung in eine Falzlängsrichtung 32a;b auf. Die Falzlängsrichtung 32a;b ist jeweils parallel zu einer der beiden Plattenbreitenrichtungen 5a oder 5b.

Die beiden ersten Stufenfalze 21 a werden jeweils von einer der beiden ersten Deckplattenseitenflächen 11a, der Deckplattenunterseite 9 und einer der Grundplattenseitenflächen 8 gebildet (Fig. 1,3). Die Deckplatte 3 kragt im Bereich der ersten Stufenfalze 21 a jeweils über die Grundplatte 2 über. Bzw. die Deckplatte 3 überragt die Grundplatte 2 in die zur jeweiligen Grundplattenseitenfläche 8 des ersten Stufenfalzes 21 a senkrechte Plattenbreitenrichtung 5a bzw. 5b. Dadurch bildet die erste Deckplattenseitenfläche 11a eine vorspringende Falzstoßfläche bzw. Falzstirnfläche 22 des ersten Stufenfalzes 21a, die Grundplattenseitenfläche 8 bildet eine rückspringende Falzstoßfläche bzw. Falzstirnfläche 23 des ersten Stufenfalzes 21a und die Deckplattenunterseite 9 bildet eine Falzanlagefläche 24 des ersten Stufenfalzes 21a.

Die beiden zweiten Stufenfalze 21 b werden jeweils von einer der beiden zweiten Deckplattenseitenflächen 11 b, der Grundplattenoberseite 7 und einer der Grundplattenseitenflächen 8 gebildet. Die Grundplatte 2 kragt im Bereich der zweiten Stufenfalze 21b jeweils über die Deckplatte 3 über. Bzw. die Grundplatte 2 überragt die Deckplatte 3 in die zur jeweiligen Grundplattenseitenfläche 8 des zweiten Stufenfalzes 21 b senkrechte Plattenbreitenrichtung 5a bzw. 5b. Dadurch bildet die Grundplattenseitenfläche 8 eine vorspringende Falzstoßfläche bzw. Falzstirnfläche 25 des zweiten Stufenfalzes 21 b, die zweite Deckplattenseitenfläche 11 b bildet eine rückspringende Falzstoßfläche bzw.

Falzstirnfläche 26 des zweiten Stufenfalzes 21 b und die Deckplattenunterseite 9 bildet eine Falzanlagefläche 27 des zweiten Stufenfalzes 21 b.

Die Falzstoßflächen 22;23;25;26 sind dabei diejenigen Flächen des Stufenfalzes 21 a;b, welche beim Verlegen der Trockenestrichplatten 1 auf Stoß aneinander bzw. gegeneinander gesetzt werden.

Die zueinander komplementären Stufenfalze 21 a;b dienen dazu, mehrere einzelne erfindungsgemäße Trockenestrichplatten 1 formschlüssig miteinander zu einem Trockenunterboden 28 bzw. Unterboden 28 in Trockenbauweise (Fig. 1-3) zu verbinden. Dabei sind mehrere Trockenestrichplatten 1 mit ihren Estrichplattenseitenflächen 20 paarweise zueinander benachbart angeordnet, wobei ihre Estrichplattenoberseiten 19 eine einheitliche, durchgehende Oberfläche bilden. Das heißt, die einzelnen Estrichplattenoberseiten 19 sind zueinander koplanar. Die Estrichplattenauflageflächen 18 liegen auf dem jeweiligen Untergrund auf.

Beim Verlegen werden zunächst die ersten Klemmflächen 12 mit Klebstoff versehen. Dann werden die einzelnen Trockenestrichplatten 1 so ineinander geschoben bzw. gesteckt, dass jeweils ein erster Stufenfalz 21a und ein zweiter Stufenfalz 21 b formschlüssig ineinander greifen. In der verlegten Position liegt die Falzanlagefläche 24 des ersten Stufenfalzes 21 a auf der Falzanlagefläche 27 des zweiten Stufenfalzes 21 b auf. Die ebenflächige, rückspringende Falzstoßfläche 23 des ersten Stufenfalzes 21 a liegt an der ebenflächigen, vorspringenden Falzstoßfläche 25 des zweiten Stufenfalzes 21 b vollflächig an bzw. ist auf Stoß mit dieser gesetzt. Die beiden Falzstoßfläche 23;25 können aber auch voneinander geringfügig beabstandet sein. Zudem liegt die vorspringende Falzstoßfläche 22 des ersten Stufenfalzes 21 a an der rückspringenden Falzstoßfläche 26 des zweiten Stufenfalzes 21 b bereichsweise an bzw. ist auf Stoß mit dieser gesetzt. Insbesondere ist die zweite Klemmfläche 16 des zweiten Stufenfalzes 21 b unterhalb der ersten Klemmfläche 12 des ersten Stufenfalzes 21a angeordnet, wobei die beiden Klemmflächen 12;16 bereichsweise flächig, nämlich in einem Klemm- bzw. Anlagebereich 31 aneinander anliegen. Dadurch wird der erste Stufenfalz 21 a zwischen der Falzanlagefläche 27 und der zweiten Klemmfläche 16 des zweiten Stufenfalzes 21 b eingeklemmt bzw. in Plattenhöhenrichtung 4 fixiert. Die beiden zueinander benachbarten Trockenestrichplatten 1 sind somit in Plattenhöhenrichtung 4 zueinander fixiert. Aufgrund des zuvor aufgebrachten Klebstoffes sind die beiden Klemmflächen 12;16 zudem miteinander verklebt, also kraftschlüssig miteinander verbunden, so dass die zueinander benachbarten Trockenestrichplatten 1 auch in die Plattenbreitenrichtungen 5a;b zueinander fixiert sind. Auch die Falzanlagefläche 27 wird vorzugsweise mit der Falzanlagefläche 24 verklebt. Ebenso die Falzstoßflächen 23 und 25. Des Weiteren können die zueinander benachbarten Trockenestrichplatten 1 auch zusätzlich miteinander verschraubt werden. Dies ist erfindungsgemäß aber nicht mehr erforderlich.

Von der Stirnfläche 13 des ersten Stufenfalzes 21 a sowie der zweiten Klemmfläche 16 und der Falzanlagefläche 27 des zweiten Stufenfalzes 21 b wird zudem erfindungsgemäß ein kanalartiger Freiraum bzw. Klebstoffaufnahmekanal 29 begrenzt. Dieser dient dazu, überschüssigen Klebstoff, der beim Ineinanderschieben der beiden Trockenestrichplatten 1 verdrängt wird, aufzunehmen. Der Klebstoffaufnahmekanal 29 erstreckt sich parallel zu den Falzlängsrichtungen 32a;b der ineinander greifenden Stufenfalze 21 a;b.

Des Weiteren grenzen die erste Fugenfläche 15 des zweiten Stufenfalzes 21 b und die erste Klemmfläche 12 des ersten Stufenfalzes 21a aneinander an und bilden eine nach oben offene, insbesondere V-förmige, Klebstoffaufnahmefuge bzw. Klebstoffaufnahmenut 30. Die Klebstoffaufnahmenut 30 erstreckt sich parallel zu den Falzlängsrichtungen 32a;b der ineinander greifenden Stufenfalze 21 a;b. Auch die Klebstoffaufnahmefuge 30 dient zur Aufnahme überschüssigen Klebstoffes, der beim Ineinanderschieben der beiden Trockenestrichplatten 1 verdrängt wird. Der aufgetragene Klebstoff kann somit sowohl in den Klebstoffaufnahmekanal 29 als auch in die Klebstoffaufnahmefuge 30 ausweichen. Aufgrund dessen wird unabhängig von der aufgetragenen Klebstoffmenge immer eine gleichbleibend breite Klebefuge zwischen den beiden benachbarten Trockenestrichplatten 1 erreicht. Schwankungen in der Klebstoffauftragsmenge werden ausgeglichen. Dadurch ist das Verlegen der erfindungsgemäßen Trockenestrichplatten 1 sehr einfach, schnell und sicher möglich und das bisher notwendige Verschrauben der Trockenestrichplatten 1 kann entfallen. Das heißt, die einzelnen Trockenestrichplatten 1 des erfindungsgemäßen Unterbodens 28 sind miteinander verbunden, indem sie ausschließlich miteinander verklemmt und verklebt sind.

Vorteil der beiden als Klemmfalze ausgebildeten Stufenfalze 21a;21b ist unter anderem auch, dass aufgrund der Klemm- und Keilwirkung ohne viel Kraftaufwand ein hoher Anpressdruck und dadurch eine hohe Klebekraft nicht nur zwischen den beiden Klemmflächen 12;16, sondern auch zwischen den beiden Falzanlageflächen 24;27 erzeugt wird. Dies verbessert den Zusammenhalt der beiden Trockenestrichplatten deutlich. Aufgrund dessen kann auf das bisher notwendige Verschrauben verzichtet werden.

Auf der einheitlichen Oberfläche des aus den einzelnen Trockenestrichplatten 1 gebildeten Trockenunterbodens 28 sind in an sich bekannter Weise übliche Bodenbeläge, z.B. Fliesen und/oder ein PVC-Bodenbelag und/oder Teppichbelag oder Sonstiges angeordnet, die beispielsweise mittels Kleber an den Estrichplattenoberseiten 19 befestigt werden (nicht dargestellt). Zudem ist der Trockenunterboden vorzugsweise schwimmend verlegt.

Im Rahmen der Erfindung liegt es dabei selbstverständlich auch, einzelne Flächen der Trockenestrichplatte beispielsweise mit einer Musterung zu versehen, die die Haftung verbessert. Die flächenmäßige Erstreckung der Flächen bleibt dabei aber erhalten.

Des Weiteren liegt es im Rahmen der Erfindung, die zueinander komplementären, die Klemmflächen 12;16 aufweisenden Falzstoßflächen 22;26 anders auszubilden. Es muss jedoch erfindungsgemäß gewährleistet sein, dass die beiden Falzstoßflächen 22;26 in Plattenhöhenrichtung 4 gesehen beidseits des Klemmbereichs 31 voneinander beabstandet sind, so dass einseitig die Klebstoffaufnahmefuge 30 und andernseitig der Klebstoffaufnahmekanal 29 ausgebildet werden. Es dürfen sich somit nicht beide Klemmflächen 12;16 über die gesamte Höhe der jeweiligen Falzstoßfläche 22;26 erstrecken. Dabei können die beiden zueinander komplementären, die Klemmflächen 12;16 aufweisenden Falzstoßflächen 22;26 auch in der Grundplatte 2 ausgebildet sein. In diesem Fall wird der Klebstoffaufnahmekanal 29 von der Deckplattenoberseite 10 begrenzt. Zudem kann die erste Klemmfläche 12 auch an einer rückspringenden Falzstoßfläche und die zweite Klemmfläche 16 an einer vorspringenden Falzstoßfläche ausgebildet sein.

Des Weiteren müssen die identischen Stufenfalze 21 a;b, z.B. bei quadratischen Platten 1, nicht paarweise aneinander grenzen. Die ersten und zweiten Stufenfalze 21 a;b können im Umfangsrichtung der Trockenestrichplatte 1 gesehen auch abwechselnd angeordnet sein.

Außerdem liegt es im Rahmen der Erfindung, dass auch die zweiten Falzstoßflächen 23;25 analog wie die erfindungsgemäßen, ersten Falzstoßflächen 22;26 ausgebildet sind. Die zweiten Falzstoßflächen 23;25 können im Prinzip beliebig ausgebildet sein. Sie müssen nur zueinander komplementär sein.

Vorteilhaft bei der erfindungsgemäßen Trockenestrichplatte 1 ist zudem, dass sie aufgrund der als Klemmfalze ausgebildeten erfindungsgemäßen Stufenfalze 21a;21b bei der Montage lediglich nur wenige Millimeter unter die benachbarte Trockenestrichplatte 1 geschoben werden muss. Denn beim Verschieben besteht die Gefahr, dass kleine Partikel, z.B. aus einer Trockenestrichschüttung in den unteren Falzbereich gelangen und ein exaktes Ineinanderfügen verhindern.

Infolgedessen kann es vorteilhaft sein, wenn die erfindungsgemäße Trockenestrichplatte 1 lediglich einen ersten, als Klemmfalz ausgebildeten Stufenfalz 21 a und einen zweiten, als Klemmfalz ausgebildeten Stufenfalz 21 b aufweist. Die beiden jeweils als Klemmfalz ausgebildeten Stufenfalze 21a;21b liegen sich in diesem Fall vorzugsweise in eine der beiden Plattenbreitenrichtungen 5a oder 5b gegenüber. Vorzugsweise sind die beiden Stufenfalze 21 a;21 b im Falle einer rechteckigen Trockenestrichplatte 1 an den beiden längeren Estrichplattenseitenflächen 20 ausgebildet. An den beiden anderen, insbesondere den kürzeren, Estrichplattenseitenflächen 20 sind dann vorzugsweise herkömmliche Stufenfalze mit zwei vertikalen Stoßflächen und einer horizontalen Falzanlagefläche vorhanden. Dies hat den Vorteil, dass die neu anzulegende Trockenestrichplatte 1 senkrecht zu den herkömmlichen Stufenfalzen überhaupt nicht verschoben werden muss, sondern nur abgesenkt und auf die bereits verlegte Platte aufgelegt werden muss.

## Patentansprüche

1. Quaderförmige Trockenestrichplatte (1) für einen Unterboden (28) in Trockenbauweise aufweisend eine Plattenhöhenrichtung (4), eine erste, ebenflächige Estrichplattenbreitseite (18), insbesondere eine Estrichplattenauflagefläche (18), eine dieser in Plattenhöhenrichtung (4) gegenüberliegende, zweite Estrichplattenbreitseite (19), insbesondere eine Estrichplattenoberseite (19), sowie vier paarweise aneinander angrenzende Estrichplattenseitenflächen (20), die jeweils einen Stufenfalz (21 a;b) aufweisen, wobei die Trockenestrichplatte (1) zumindest einen ersten Stufenfalz (21a) und zumindest einen dazu komplementären, zweiten Stufenfalz (21 b) aufweist, und
wobei die Stufenfalze (21a;21b) jeweils eine erste Falzstoßfläche (22;25), eine zweite Falzstoßfläche (23;26) und dazwischen eine Falzanlagefläche (24;27) aufweisen, und
wobei die erste Falzstoßfläche (22) des ersten Stufenfalzes (21 a) eine erste, schräge Klemmfläche. (12) aufweist und die dazu komplementäre, erste Falzstoßfläche (26) des zweiten Stufenfalzes (21 b) eine zweite, schräge Klemmfläche (16) aufweist,
wobei die beiden ersten Falzstoßflächen (22;26) derart ausgebildet sind, dass nach dem Zusammenstecken zweier Trockenestrichplatten (1) derart, dass die beiden Stufenfalze (21a;b) formschlüssig ineinander greifen,
- die beiden Klemmflächen (12;16) zumindest bereichsweise in einem Klemmbereich (31) flächig aneinander liegen, und
- die beiden ersten Falzstoßflächen (22;26) in Plattenhöhenrichtung (4) gesehen beidseits des Klemmbereichs (31) voneinander beabstandet sind,
**dadurch gekennzeichnet, dass**
die Trockenestrichplatte (1) eine quaderförmige Grundplatte (2) und eine damit fest verbundene, quaderförmige Deckplatte (3) aufweist, wobei die Grundplatte (2) und die Deckplatte (3) derart zueinander versetzt angeordnet sind, dass die Stufenfalze (21a;b) ausgebildet werden und wobei eine der Deckplatte (3) abgewandte Grundplattenauflagefläche (6) die erste Estrichplattenbreitseite (18), insbesondere die Estrichplattenauflagefläche (18), und eine der Grundplatte (2) abgewandte Deckplattenoberseite (10) die zweite Estrichplattenbreitseite (19), insbesondere die Estrichplattenoberseite (19), bildet.

2. Trockenestrichplatte (1) nach Anspruch 1,
**dadurch gekennzeichnet, dass**
die beiden ersten Falzstoßflächen (22;26) derart ausgebildet sind, dass nach dem Zusammenstecken zweier Trockenestrichplatten (1) derart, dass die beiden Stufenfalze (21a;b) formschlüssig ineinander greifen, in Plattenhöhenrichtung (4) gesehen auf der einen Seite des Klemmbereichs (31) eine zur zweiten Estrichplattenbreitseite (19), insbesondere zur Estrichplattenoberseite (19), hin offene Klebstoffaufnahmefuge (30) und auf der anderen Seite des Klemmbereichs (31) ein Klebstoffaufnahmekanal (29) gebildet wird, wobei sich insbesondere der Klebstoffaufnahmekanal (29) und die Klebstoffaufnahmefuge (30) parallel zu Falzlängsrichtungen (32a;b) der ineinander greifenden Stufenfalze (21a;b) erstrecken.

3. Trockenestrichplatte (1) nach Anspruch 1 oder 2,
**dadurch gekennzeichnet, dass**
die erste Falzstoßfläche (22) des ersten Stufenfalzes (21 a) in Plattenhöhenrichtung (4) von der zweiten Estrichplattenbreitseite (19), insbesondere von der Estrichplattenoberseite (19), zur ersten Estrichplattenbreitseite (18), insbesondere zur Estrichplattenauflagefläche (18), hin gesehen aufweist:
- die erste Klemmfläche (12),
- eine sich daran anschließende Stirnfläche (13), wobei die erste Klemmfläche (12) und die Stirnfläche (13) über eine erste, konvexe, Stoßflächenkante (14) ineinander übergehen,
und
dass die erste Falzstoßfläche (26) des zweiten Stufenfalzes (21 b) in Plattenhöhenrichtung (4) von der zweiten Estrichplattenbreitseite (19), insbesondere von der Estrichplattenoberseite (19), zur ersten Estrichplattenbreitseite (18), insbesondere zur Estrichplattenauflagefläche (18), hin gesehen aufweist:
- eine Fugenfläche (15),
- die zweite Klemmfläche (16), welche sich an die Fugenfläche (15) anschließt, wobei die zweite Klemmfläche (16) und die Fugenfläche (15) über eine zweite, konvexe Stoßflächenkante (17) ineinander übergehen, wobei die zweite Stoßflächenkante (17) in Plattenhöhenrichtung (4) gesehen einen größeren Abstand von der ersten Estrichplattenbreitseite (18), insbesondere von der Estrichplattenauflagefläche (18), aufweist als die erste Stoßflächenkante (14).

4. Trockenestrichplatte (1) nach einem der vorhergehenden Ansprüche,
**dadurch gekennzeichnet, dass**
sich die erste Klemmfläche (12) von der zweiten Estrichplattenbreitseite (19), insbesondere von der Estrichplattenoberseite (19), aus gesehen schräg auf die erste Estrichplattenbreitseite (18), insbesondere auf die Estrichplattenauflagefläche (18), zu und von der gegenüberliegenden Estrichplattenseitenfläche (20) weg erstreckt, wobei vorzugsweise die erste Klemmfläche (12) mit der zweiten Estrichplattenbreitseite (19), insbesondere mit der Estrichplattenoberseite (19), einen Winkel α einschließt, wobei vorzugsweise gilt: 180° < α < 270°.

5. Trockenestrichplatte (1) nach einem der vorhergehenden Ansprüche,
**dadurch gekennzeichnet, dass**
sich die zweite Klemmfläche (16) von der zweiten Estrichplattenbreitseite (19), insbesondere von der Estrichplattenoberseite (19), aus gesehen schräg auf die erste Estrichplattenbreitseite (18), insbesondere auf die Estrichplattenauflagefläche (18), zu und zu der gegenüberliegenden Estrichplattenseitenfläche (20) hin erstreckt.

6. Trockenestrichplatte (1) nach einem der Ansprüche 3 bis 5,
**dadurch gekennzeichnet, dass**
die Fugenfläche (15) mit der zweiten Klemmfläche (16) einen Winkel δ einschließt, wobei gilt: 180° < δ, wobei vorzugsweise sich die Fugenfläche (15) von der zweiten Klemmfläche (16) aus gesehen schräg auf die zweite Estrichplattenbreitseite (19), insbesondere auf die Estrichplattenoberseite (19), zu und auf die gegenüberliegende Estrichplattenseitenfläche (20) zu erstreckt.

7. Trockenestrichplatte (1) nach einem der vorhergehenden Ansprüche,
**dadurch gekennzeichnet, dass**
die erste Klemmfläche (12) und die zweite Klemmfläche (16) jeweils eine Steigung m_{KF1};m_{KF2} in Plattenhöhenrichtung (4) aufweisen, wobei die beiden Steigungen m_{KF1};m_{KF2} betragsmäßig gleich sind, wobei vorzugsweise die erste und die zweite Klemmfläche (12;16) zumindest bereichsweise auf gleicher Höhe in Bezug auf die Plattenhöhenrichtung (4) angeordnet sind.

8. Trockenestrichplatte (1) nach einem der vorhergehenden Ansprüche,
**dadurch gekennzeichnet, dass**
die erste Falzstoßfläche (22) des ersten Stufenfalzes (21a) vorspringend ist und die erste Falzstoßfläche (26) des zweiten Stufenfalzes (21b) rückspringend ist.

9. Trockenestrichplatte (1) nach einem der vorhergehenden Ansprüche,
**dadurch gekennzeichnet, dass**
die Falzanlageflächen (24;26) des ersten und zweiten Stufenfalzes (21a;b) zur Plattenhöhenrichtung (4) senkrecht und zueinander koplanar sind.

10. Trockenestrichplatte (1) nach einem der vorhergehenden Ansprüche,
**dadurch gekennzeichnet, dass**
die Trockenestrichplatte (1) eine erste und zweite Plattenbreitenrichtung (5a;b) aufweist, wobei die beiden Plattenbreitenrichtungen (5a;b) zueinander und zur Plattenhöhenrichtung (4) senkrecht sind, wobei vorzugsweise
sich die zueinander komplementären Stufenfalze (21a;b) in die erste Plattenbreitenrichtung (5a) gesehen gegenüberliegen, wobei vorzugsweise die beiden Klemmflächen (12;16) der beiden sich in die erste Plattenbreitenrichtung (5a) gegenüberliegenden Stufenfalze (21a;b) in die erste Plattenbreitenrichtung (5a) zumindest bereichsweise zueinander fluchtend angeordnet sind.

11. Trockenestrichplatte (1) nach einem der vorhergehenden Ansprüche,
**dadurch gekennzeichnet, dass**
es sich bei der Grundplatte (2) und der Deckplatte (3) jeweils um eine Gipsfaserplatte oder zementäre bzw. zementgebundene Platte oder Holzfaserplatte oder Holzwerkstoffplatte handelt, wobei die Grundplatte (2) und die Deckplatte (3) miteinander fest verbunden, insbesondere verklebt und/oder geklammert sind.

12. Unterboden (28) in Trockenbauweise mit zumindest zwei quaderförmigen Trockenestrichplatten (1), vorzugsweise mit zumindest zwei Trockenestrichplatten (1) nach einem der vorhergehenden Ansprüche, die jeweils eine Plattenhöhenrichtung (4), eine ebenflächige Estrichplattenauflagefläche (18), eine dieser in Plattenhöhenrichtung (4) gegenüberliegende Estrichplattenoberseite (19) sowie vier paarweise aneinander angrenzende Estrichplattenseitenflächen (20), aufweisen, die jeweils einen Stufenfalz (21a;b) aufweisen,
wobei die Stufenfalze (21 a;21 b) jeweils eine erste Falzstoßfläche (22;25), eine zweite Falzstoßfläche (23;26) und dazwischen eine Falzanlagefläche (24;27) aufweisen,
wobei die erste Falzstoßfläche (22) des ersten Stufenfalzes (21a) eine erste, schräge Klemmfläche (12) aufweist und die dazu komplementäre, erste Falzstoßfläche (26) des zweiten Stufenfalzes (21 b) eine zweite, zur ersten Klemmfläche (12) parallele, schräge Klemmfläche (16) aufweist, wobei die beiden Klemmflächen (12;16) zumindest bereichsweise in einem Klemmbereich (31) flächig aneinander liegen, wobei die beiden Falzstoßflächen (22;26) in Plattenhöhenrichtung (4) gesehen beidseits des Klemmbereichs (31) voneinander beabstandet sind, **dadurch gekennzeichnet, dass**
die erste Trockenestrichplatte (1) zumindest einen ersten Stufenfalz (21 a) und die zweite Trockenestrichplatte (1) zumindest einen dazu komplementären, zweiten Stufenfalz (21b) aufweist, wobei die beiden Stufenfalze (21 a;b) formschlüssig ineinander greifen, und wobei die Trockenestrichplatten (1) jeweils eine quaderförmige Grundplatte (2) und eine damit fest verbundene, quaderförmige Deckplatte (3) aufweisen, wobei die Grundplatte (2) und die Deckplatte (3) derart zueinander versetzt angeordnet sind, dass die Stufenfalze (21a;b) ausgebildet werden und wobei eine der Deckplatte (3) abgewandte Grundplattenauflagefläche (6) die Estrichplattenauflagefläche (18), und eine der Grundplatte (2) abgewandte Deckplattenoberseite (10) die Estrichplattenoberseite (19), bildet.

13. Unterboden (28) nach Anspruch 12,
**dadurch gekennzeichnet, dass**
in Plattenhöhenrichtung (4) gesehen auf der einen Seite des Klemmbereichs (31) eine zur Estrichplattenoberseite (19) hin offene Klebstoffaufnahmefuge (30) und auf der anderen Seite des Klemmbereichs (31) ein Klebstoffaufnahmekanal (29) vorhanden ist, wobei sich insbesondere der Klebstoffaufnahmekanal (29) und die Klebstoffaufnahmefuge (30) parallel zu Falzlängsrichtungen (32a;b) der ineinander greifenden Stufenfalze (21a;b) erstrecken.

14. Unterboden (28) nach Anspruch 13,
**dadurch gekennzeichnet, dass**
der Klebstoffaufnahmekanal (29) von der zweiten Klemmfläche (16), der Stirnfläche (13) und der Falzanlagenfläche (24;27) des ersten oder des zweiten Stufenfalzes (21a;b) begrenzt wird, und
die Klebstoffaufnahmefuge (30) von der ersten Klemmfläche (12) und der Fugenfläche (15) gebildet wird.

15. Unterboden (28) nach einem der Ansprüche 12 bis 14,
**dadurch gekennzeichnet, dass**
die einzelnen Trockenestrichplatten (1) des Unterbodens (28) ausschließlich miteinander verklemmt und verklebt sind.

## Claims

1. Cuboid-shaped dry screed board (1) for a sub-floor (28) in dry construction having a board height direction (4), a first planar screed board wide side (18), in particular a screed board supporting surface (18), a second screed board wide side (19), in particular a screed board top side (19), lying opposite the first planar screed board wide side (18) in the board height direction (4), and four screed board side faces (20) adjoining one another in pairs and each having a rebate (21a;b), wherein the dry screed board (1) has at least one first rebate (21 a) and at least one second rebate (21 b) complementary thereto, and
wherein the rebates (21a;21b) each have a first rebate abutting surface (22;25), a second rebate abutting surface (23;26) and a rebate contact surface (24;27) therebetween, and
wherein the first rebate abutting surface (22) of the first rebate (21 a) has a first, oblique clamping surface (12) and the first rebate abutting surface (26), complementary thereto, of the second rebate (21 b) has a second, oblique clamping surface (16),
wherein the two first rebate abutting surfaces (22;26) are configured in such a way that after fitting together two dry screed boards (1) in such a way that the two rebates (21 a;b) positively interlock,
- the two clamping surfaces (12;16) lie flat against one another at least regionally in a clamping region (31), and
- the two first rebate abutting surfaces (22;26), seen in the board height direction (4), are spaced apart from one another on both sides of the clamping region (31),
**characterised in that**
the dry screed board (1) has a cuboid-shaped base board (2) and a cuboid-shaped cover board (3) firmly connected thereto, wherein the base board (2) and the cover board (3) are arranged offset from one another in such a way that the rebates (21 a;b) are formed and wherein a base board supporting surface (6) facing away from the cover board (3) forms the first screed board wide side(18), in particular the screed board supporting surface (18), and a cover board top side (10) facing away from the base board (2) forms the second screed board wide side (19), in particular the screed board top side (19).

2. Dry screed board (1) according to Claim 1,
**characterised in that**
the two first rebate abutting surfaces (22;26) are configured in such a way that after fitting together two dry screed boards (1) in such a way that the two rebates (21a;b) positively interlock, seen in the board height direction (4), on one side of the clamping region (31) an adhesive-receiving gap (30) open towards the second screed board wide side (19), in particular towards the screed board top side (19), is formed, and on the other side of the clamping region (31) an adhesive-receiving channel (29) is formed, wherein in particular the adhesive-receiving channel (29) and the adhesive-receiving gap (30) extend parallel to rebate longitudinal directions (32a;b) of the interlocking rebates (21a;b).

3. Dry screed board (1) according to Claim 1 or 2,
**characterised in that**
the first rebate abutting surface (22) of the first rebate (21 a), seen in the board height direction (4) from the second screed board wide side(19), in particular from the screed board top side (19), towards the first screed board wide side (18), in particular towards the screed board supporting surface (18), comprises:
- the first clamping surface (12),
- an end face (13) adjoining the latter, wherein the first clamping surface (12) and the end face (13) merge into one another via a first, convex, abutting surface edge (14),
and
**in that** the first rebate abutting surface (26) of the second rebate (21 b), seen in the board height direction (4) from the second screed board wide side (19), in particular from the screed board top side (19), towards the first screed board wide side (18), in particular towards the screed board supporting surface (18), comprises:
- a gap surface (15),
- the second clamping surface (16), which adjoins the gap surface (15), wherein the second clamping surface (16) and the gap surface (15) merge into one another via a second, convex abutting surface edge (17), wherein the second abutting surface edge (17), seen in the board height direction (4), is at a greater distance from the first screed board wide side (18), in particular from the screed board supporting surface (18), than the first abutting surface edge (14).

4. Dry screed board (1) according to one of the preceding claims,
**characterised in that**
the first clamping surface (12), seen from the second screed board wide side (19), in particular from the screed board top side (19), extends obliquely towards the first screed board wide side (18), in particular towards the screed board supporting surface (18), and away from the opposite screed board side face (20), wherein preferably the first clamping surface (12) encloses with the second screed board wide side (19), in particular with the screed board top side (19), an angle α, where preferably it holds that: 180° < α < 270°.

5. Dry screed board (1) according to one of the preceding claims,
**characterised in that**
the second clamping surface (16), seen from the second screed board wide side (19), in particular from the screed board top side (19), extends obliquely towards the first screed board wide side (18), in particular towards the screed board supporting surface (18), and towards the opposite screed board side face (20).

6. Dry screed board (1) according to one of Claims 3 to 5,
**characterised in that**
the gap surface (15) encloses with the second clamping surface (16) an angle δ, where it holds that: 180° < δ, wherein preferably the gap surface (15), seen from the second clamping surface (16), extends obliquely towards the second screed board wide side (19), in particular towards the screed board top side (19), and towards the opposite screed board side face (20).

7. Dry screed board (1) according to one of the preceding claims,
**characterised in that**
the first clamping surface (12) and the second clamping surface (16) each have a slope m_{KF1};m_{KF2} in the board height direction (4), wherein the two slopes m_{KF1};m_{KF2} are equal in absolute value, wherein preferably the first and the second clamping surface (12;16) are arranged at least regionally at the same height with respect to the board height direction (4).

8. Dry screed board (1) according to one of the preceding claims,
**characterised in that**
the first rebate abutting surface (22) of the first rebate (21 a) is prominent and the first rebate abutting surface (26) of the second rebate (21 b) is set back.

9. Dry screed board (1) according to one of the preceding claims,
**characterised in that**
the rebate contact surfaces (24;26) of the first and second rebate (21a;b) are perpendicular to the board height direction (4) and coplanar to one another.

10. Dry screed board (1) according to one of the preceding claims,
**characterised in that**
the dry screed board (1) has a first and second board width direction (5a;b), wherein the two board width directions (5a;b) are perpendicular to one another and to the board height direction (4), wherein preferably the mutually complementary rebates (21a;b) lie opposite one another, seen in the first board width direction (5a), wherein preferably the two clamping surfaces (12;16) of the two rebates (21a;b) lying opposite one another in the first board width direction (5a) are arranged, at least regionally, aligned with one another seen in the first board width direction (5a).

11. Dry screed board (1) according to one of the preceding claims,
**characterised in that**
the base board (2) and the cover board (3) are each a gypsum fibre board or cementitious or cement-bonded board or wood fibre board or wood material board, wherein the base board (2) and the cover board (3) are firmly connected to one another, in particular glued and/or clamped.

12. Sub-floor (28) in dry construction having at least two cuboid-shaped dry screed boards (1), preferably having at least two dry screed boards (1) according to one of the preceding claims, which each have a board height direction (4), a planar screed board supporting surface (18), a screed board top side (19) lying opposite the screed board supporting surface (18) in the board height direction (4), and four screed board side faces (20) adjoining one another in pairs and each having a rebate (21 a;b),
wherein the rebates (21a;21b) each have a first rebate abutting surface (22;25), a second rebate abutting surface (23;26) and a rebate contact surface (24;27) therebetween,
wherein the first rebate abutting surface (22) of the first rebate (21 a) has a first, oblique clamping surface (12) and the first rebate abutting surface (26), complementary thereto, of the second rebate (21 b) has a second, oblique clamping surface (16), parallel to the first clamping surface (12), wherein the two clamping surfaces (12;16) lie flat against one another at least regionally in a clamping region (31), wherein the two rebate abutting surfaces (22;26), seen in the board height direction (4), are spaced apart from one another on both sides of the clamping region (31),
**characterised in that**
the first dry screed board (1) has at least one first rebate (21 a) and the second dry screed board (1) has at least one second rebate (21 b) complementary thereto, wherein the two rebates (21a;b) positively interlock, and
wherein the dry screed boards (1) each have a cuboid-shaped base board (2) and a cuboid-shaped cover board (3) firmly connected thereto, wherein the base board (2) and the cover board (3) are arranged offset from one another in such a way that the rebates (21 a;b) are formed and wherein a base board supporting surface (6) facing away from the cover board (3) forms the screed board supporting surface (18), and a cover board top side (10) facing away from the base board (2) forms the screed board top side (19).

13. Sub-floor (28) according to Claim 12,
**characterised in that**,
seen in the board height direction (4), on one side of the clamping region (31) an adhesive-receiving gap (30) open towards the screed board top side (19) is present, and on the other side of the clamping region (31) an adhesive-receiving channel (29) is present, wherein in particular the adhesive-receiving channel (29) and the adhesive-receiving gap (30) extend parallel to rebate longitudinal directions (32a;b) of the interlocking rebates (21 a;b).

14. Sub-floor (28) according to Claim 13,
**characterised in that**
the adhesive-receiving channel (29) is bounded by the second clamping surface (16), the end face (13) and the rebate contact surface (24;27) of the first or the second rebate (21 a;b), and
the adhesive-receiving gap (30) is formed by the first clamping surface (12) and the gap surface (15).

15. Sub-floor (28) according to one of Claims 12 to 14,
**characterised in that**
the individual dry screed boards (1) of the sub-floor (28) are exclusively clamped and glued to one another.

## Revendications

1. Plaque de chape sèche (1) de forme carrée pour un sous-sol (28) à construction sèche, présentant un sens de hauteur de plaque (4), un premier côté large de plaque de chape (18) plan, en particulier une surface de réception de plaque de chape (18), un deuxième côté large de plaque de chape (19) faisant face dans le sens de la hauteur de plaque (4), en particulier un côté supérieur de plaque de chape (19), ainsi que quatre surfaces latérales de plaque de chape (20) se jouxtant les unes les autres par paires, lesquelles présentent respectivement une feuillure à épaulement (21 a ; b), dans laquelle la plaque de chape sèche (1) présente au moins une première feuillure à épaulement (21 a) et au moins une deuxième feuillure à épaulement (21 b) complémentaire, et
dans laquelle les feuillures à épaulement (21 a ; 21 b) présentent respectivement une première surface d'about de feuillure (22 ; 25), une deuxième surface d'about de feuillure (23 ; 26) et, de manière intercalée, une surface d'appui de feuillure (24 ; 27), et
dans laquelle la première surface d'about de feuillure (22) de la première feuillure à épaulement (21 a) présente une première surface de serrage (12) oblique et la première surface d'about de feuillure (26) complémentaire de la deuxième feuillure à épaulement (21 b) présente une deuxième surface de serrage (16) oblique,
dans laquelle les deux premières surfaces d'about de feuillure (22 ; 26) sont réalisées de telle manière qu'après l'emboîtement des deux plaques de chape sèche (1) de telle manière que les deux feuillures à épaulement (21 a ; b) viennent en prise l'une avec l'autre par complémentarité de forme,
- les deux surfaces de serrage (12 ; 16) se situent l'une contre l'autre à plat au moins par endroits dans une zone de serrage (31), et
- que les deux premières surfaces d'about de feuillure (22 ; 26), vues dans le sens de la hauteur des plaques (4), sont espacées l'une de l'autre de part et d'autre de la zone de serrage (31),
**caractérisée en ce que**
la plaque de chape sèche (1) présente une plaque de base (2) de forme carrée et une plaque de recouvrement (3) de forme carrée, reliée de manière solidaire à la plaque de base, dans laquelle la plaque de base (2) et la plaque de recouvrement (3) sont disposées de manière décalée l'une par rapport à l'autre de telle manière que les feuillures à épaulement (21 a ; b) sont réalisées et dans laquelle une surface de réception de plaque de base (6) opposée à la plaque de recouvrement (3) forme le premier côté large de plaque de chape (18), en particulier la surface de réception de plaque de chape (18), et un côté supérieur de plaque de recouvrement (10) opposé à la plaque de base (2) forme le deuxième côté large de plaque de chape (19), en particulier le côté supérieur de plaque de chape (19).

2. Plaque de chape sèche (1) selon la revendication 1,
**caractérisée en ce que**
les deux premières surfaces d'about de feuillure (22 ; 26) sont réalisées de telle manière qu'après l'emboîtement de deux plaques de chape sèche (1) de telle manière que les deux feuillures à épaulement (21 a ; b) viennent en prise l'une avec l'autre par complémentarité de forme, vus dans le sens de la hauteur de plaque (4), un joint de réception de colle (30) ouvert en direction du deuxième côté large de plaque de chape (19), en particulier en direction du côté supérieur de plaque de chape (19), est formé sur l'un des côtés de la zone de serrage (31) et un canal de réception de colle (29) est formé sur l'autre côté de la zone de serrage (31) vus dans le sens de la hauteur de plaque, dans laquelle en particulier le canal de réception de colle (29) et le joint de réception de colle (30) s'étendent de manière parallèle par rapport aux sens dans la longueur de feuillure (32a ; b) des feuillures à épaulement (21 a ; b) venant en prise l'une avec l'autre.

3. Plaque de chape sèche (1) selon la revendication 1 ou 2,
**caractérisée en ce que**
la première surface d'about de feuillure (22) de la première feuillure à épaulement (21 a) présente, vue dans le sens de la hauteur de plaque (4) depuis le deuxième côté large de plaque de chape (19), en particulier depuis le côté supérieur de plaque de chape (19), en direction du premier côté large de plaque de chape (18), en particulier en direction de la surface de réception de plaque de chape (18) ;
- la première surface de serrage (12),
- une surface frontale (13) s'y raccordant, dans laquelle la première surface de serrage (12) et la surface frontale (13) se confondent l'une dans l'autre en passant par un premier bord de surface d'about (14) convexe,
et
**en ce que** la première surface d'about de feuillure (26) de la deuxième feuillure à épaulement (21 b) présente, vue dans le sens de la hauteur de plaque (4) depuis le deuxième côté large de plaque de chape (19), en particulier depuis le côté supérieur de plaque de chape (19), en direction du premier côté large de plaque de chape (18), en particulier en direction de la surface de réception de plaque de chape (18) :
- une surface de jointoiement (15),
- la deuxième surface de serrage (16), qui se raccorde à la surface de jointoiement (15), dans laquelle la deuxième surface de serrage (16) et la surface de jointoiement (15) se confondent l'une dans l'autre en passant par un deuxième bord de surface d'about (17) convexe, dans laquelle le deuxième bord de surface d'about (17) présente, vu dans le sens de la hauteur de plaque (4), une plus grande distance par rapport au premier côté large de plaque de chape (18), en particulier par rapport à la surface de réception de plaque de chape (18) que le premier bord de surface d'about (14).

4. Plaque de chape sèche (1) selon l'une quelconque des revendications précédentes,
**caractérisée en ce que**
la première surface de serrage (12) s'étend, vue depuis le deuxième côté large de plaque de chape (19), en particulier depuis le côté supérieur de plaque de chape (19), de manière oblique vers le premier côté large de plaque de chape (18), en particulier vers la surface de réception de plaque de chape (18) et de manière à s'éloigner de la surface latérale de plaque de chape (20) faisant face, dans laquelle de préférence la première surface de serrage (12) forme avec le deuxième côté large de plaque de chape (19), en particulier avec le côté supérieur de plaque de chape (19), un angle α, dans laquelle de préférence s'applique : 180° < α < 270°.

5. Plaque de chape sèche (1) selon l'une quelconque des revendications précédentes,
**caractérisée en ce que**
la deuxième surface de serrage (16) s'étend vue depuis le deuxième côté large de plaque de chape (19), en particulier depuis le côté supérieur de plaque de chape (19), de manière oblique vers le premier côté large de plaque de chape (18), en particulier vers la surface de réception de plaque de chape (18), et en direction de la surface latérale de plaque de chape (20) faisant face.

6. Plaque de chape sèche (1) selon l'une quelconque des revendications 3 à 5,
**caractérisée en ce que**
la surface de jointoiement (15) forme avec la deuxième surface de serrage (16) un angle δ, dans laquelle s'applique : 180° < δ, dans laquelle de préférence
la surface de jointoiement (15) s'étend vue depuis la deuxième surface de serrage (16) de manière oblique vers le deuxième côté large de plaque de chape (19), en particulier vers le côté supérieur de plaque de chape (19), et en direction de la surface latérale de plaque de chape (20) faisant face.

7. Plaque de chape sèche (1) selon l'une quelconque des revendications précédentes,
**caractérisée en ce que**
la première surface de serrage (12) et la deuxième surface de serrage (16) présentent respectivement une pente m_{KF1} ; m_{KF2} dans le sens de la hauteur de plaque (4), dans laquelle les deux pentes m_{KF1} ; m_{KF2} sont identiques en termes de valeur, dans laquelle de préférence la première et la deuxième surface de serrage (12 ; 16) sont disposées au moins par endroits à la même hauteur par rapport au sens de la hauteur de plaque (4).

8. Plaque de chape sèche (1) selon l'une quelconque des revendications précédentes,
**caractérisée en ce que**
la première surface d'about de feuillure (22) de la première feuillure à épaulement (21 a) fait saillie vers l'avant, et la première surface d'about de feuillure (26) de la deuxième feuillure à épaulement (21 b) est en retrait.

9. Plaque de chape sèche (1) selon l'une quelconque des revendications précédentes,
**caractérisée en ce que**
les surfaces d'appui de feuillure (24 ; 26) de la première et de la deuxième feuillure à épaulement (21 a; b) sont perpendiculaires par rapport au sens de la hauteur de plaque (4) et sont coplanaires l'une par rapport à l'autre.

10. Plaque de chape sèche (1) selon l'une quelconque des revendications précédentes,
**caractérisée en ce que**
la plaque de chape sèche (1) présente un premier sens de largeur de plaque et un second sens de largeur de plaque (5a ; b), dans laquelle les deux sens de largeur de plaque (5a ; b) sont perpendiculaires l'un par rapport à l'autre et par rapport au sens de la hauteur de plaque (4), dans laquelle de préférence
les feuillures à épaulement (21 a; b) complémentaires l'une à l'autre se font face vues dans le premier sens de la largeur de plaque (5a), dans laquelle de préférence les deux surfaces de serrage (12 ; 16) des deux feuillures à épaulement (21 a; b) se faisant face dans le premier sens de la largeur de plaque (5a) sont disposées au moins par endroits en alignement l'une par rapport à l'autre dans le premier sens de la largeur de plaque (5a).

11. Plaque de chape sèche (11) selon l'une quelconque des revendications précédentes,
**caractérisée en ce que**
la plaque de base (2) et la plaque de recouvrement (3) sont respectivement une plaque de plâtre armé de fibres ou une plaque à base de ciment ou liée au ciment ou une plaque de fibres de bois ou une plaque en un matériau dérivé du bois, dans laquelle la plaque de base (2) et la plaque de recouvrement (3) sont reliées de manière solidaire l'une à l'autre, en particulier sont collées et/ou sont accrochées l'une à l'autre.

12. Sous-sol (28) à construction sèche comprenant au moins deux plaques de chape sèche (1) de forme carrée, de préférence comprenant au moins deux plaques de chape sèche (1) selon l'une quelconque des revendications précédentes, lesquelles présentent respectivement un sens de hauteur de plaque (4), une surface de réception de plaque de chape (18) plane, un côté supérieur de plaque de chape (19) se faisant face dans le sens de la hauteur de plaque (4) ainsi que quatre surfaces latérales de plaque de chape (20) se jouxtant les unes les autres par paires, qui présentent respectivement une feuillure à épaulement (21 a ; b),
dans lequel les feuillures à épaulement (21 a ; 21 b) présentent respectivement une première surface d'about de feuillure (22 ; 25), une deuxième surface d'about de feuillure (23 ; 26) et, de manière intercalée, une surface d'appui de feuillure (24 ; 27),
dans lequel la première surface d'about de feuillure (22) de la première feuillure à épaulement (21 a) présente une première surface de serrage (12) oblique et la première surface d'about de feuillure (26) complémentaire de la deuxième feuillure à épaulement (21 b) présente une deuxième surface de serrage (16) oblique parallèle à la première surface de serrage (12), dans lequel les deux surfaces de serrage (12 ; 16) se situent l'une contre l'autre à plat au moins par endroits dans une zone de serrage (31), dans lequel les deux surfaces d'about de feuillure (22 ; 26) sont, vues dans le sens de la hauteur de plaque (4), espacées l'une de l'autre de part et d'autre de la zone de serrage (31),
**caractérisé en ce que**
la première plaque de chape sèche (1) présente au moins une première feuillure à épaulement (21 a) et la deuxième plaque de chape sèche (1) présente au moins une deuxième feuillure à épaulement (21 b) complémentaire, dans lequel les deux feuillures à épaulement (21 a ; b) viennent en prise l'une avec l'autre par complémentarité de forme, et
dans lequel les plaques de chape sèche (1) présentent respectivement une plaque de base (2) de forme carrée et une plaque de recouvrement (3) de forme carrée reliée de manière solidaire à la plaque de base, dans lequel la plaque de base (2) et la plaque de recouvrement (3) sont disposées de manière décalée l'une par rapport à l'autre de telle manière que les feuillures à épaulement (21 a ; b) sont réalisées et dans lequel une surface de réception de plaque de base (6) opposée à la plaque de recouvrement (3) forme la surface de réception de plaque de chape (18) et un côté supérieur de plaque de recouvrement (10) opposé à la plaque de base (2) forme le côté supérieur de plaque de chape (19).

13. Sous-sol (28) selon la revendication 12,
**caractérisé en ce que**
vus dans le sens de la hauteur de plaque (4), un joint de réception de colle (30) ouvert en direction du côté supérieur de plaque de chape (19) est présent sur l'un des côtés de la zone de serrage (31) et un canal de réception de colle (29) est présent sur l'autre côté de la zone de serrage (31), dans lequel en particulier le canal de réception de colle (29) et le joint de réception de colle (30) s'étendent de manière parallèle par rapport à des sens de longueur de feuillure (32a ; b) des feuillures à épaulement (21 a ; b) venant en prise l'une avec l'autre.

14. Sous-sol (28) selon la revendication 13,
**caractérisé en ce que**
le canal de réception de colle (29) est délimité par la deuxième surface de serrage (16), par la surface frontale (13) et par la surface d'appui de feuillure (24 ; 27) de la première ou de la deuxième feuillure à épaulement (21 a ; b), et
le joint de réception de colle (30) est formé par la première surface de serrage (12) et par la surface de jointoiement (15).

15. Sous-sol (28) selon l'une quelconque des revendications 12 à 14,
**caractérisé en ce que**
les diverses plaques de chape sèche (1) du sous-sol (28) sont exclusivement serrées et collées les unes aux autres.
